# EUROPEAN PATENT SPECIFICATION

(11) **EP 4 689 203 B1**
(45) Date of publication and mention of the grant of the patent: **11.11.2026**
(21) Application number: 24719637.1
(22) Date of filing: 28.03.2024
(51) Int. Cl.: C22B 1/00, C22B 7/04, B09B 3/80

(54) **A METHOD OF VALORISING A SOLID WASTE PRODUCT**
VERFAHREN ZUR VERWERTUNG EINES FESTEN ABFALLPRODUKTS
PROCÉDÉ DE VALORISATION D'UN PRODUIT DE DÉCHETS SOLIDES

(30) Priority: 30.03.2023 ZA 202303981
(43) Date of publication of application: 11.02.2026
(73) Proprietor: University Of The Witwatersrand, Johannesburg, Braamfontein Johannesburg 2000 Gauteng (ZA)
(72) Inventor: SHEMI, Alan, 2000 Johannesburg (ZA); BODUNRIN, Michael, 2000 Johannesburg (ZA); NDLOVU, Sehliselo, 2000 Johannesburg (ZA)
(74) Representative: Cremer & Cremer
(86) International application number: PCT/IB2024/053013
(87) International publication number: WO 2024/201357

(56) References cited:
- CN-A- 114 277 461
- CN-A- 115 627 366
- PEETERS NAND ET AL: "Solvometallurgical recovery of cobalt from lithium-ion battery cathode materials using deep-eutectic solvents", GREEN CHEMISTRY, vol. 22, no. 13, 1 January 2020 (2020-01-01), GB, pages 4210 - 4221, XP093177132, ISSN: 1463-9262, DOI: 10.1039/D0GC00940G
- SHAFIE MUHAMMAD HAKIMIN ET AL: "Synthesis of citric acid monohydrate-choline chloride based deep eutectic solvents (DES) and characterization of their physicochemical properties", JOURNAL OF MOLECULAR LIQUIDS, vol. 288, 1 August 2019 (2019-08-01), NL, pages 111081, XP093177039, ISSN: 0167-7322, DOI: 10.1016/j.molliq.2019.111081
- MATINDE E.: "Mining and metallurgical wastes: a review of recycling and re-use practices", JOURNAL OF THE SOUTHERN AFRICAN INSTITUTE OF MINING AND METALLURGY, vol. 118, no. 8, 1 January 2018 (2018-01-01), Johannesburg, South Africa, XP093177879, ISSN: 2225-6253, DOI: 10.17159/2411-9717/2018/v118n8a5
- ANDREW P. ABBOTT ET AL: "Deep Eutectic Solvents Formed between Choline Chloride and Carboxylic Acids: Versatile Alternatives to Ionic Liquids", JOURNAL OF THE AMERICAN CHEMICAL SOCIETY, vol. 126, no. 29, 1 July 2004 (2004-07-01), pages 9142 - 9147, XP055254619, ISSN: 0002-7863, DOI: 10.1021/ja048266j
- OLIVER S HAMMOND ET AL: "The Effect of Water upon Deep Eutectic Solvent Nanostructure: An Unusual Transition from Ionic Mixture to Aqueous Solution", ANGEWANDTE CHEMIE, WILEY - V C H VERLAG GMBH & CO. KGAA, DE, vol. 129, no. 33, 29 May 2017 (2017-05-29), pages 9914 - 9917, XP071371027, ISSN: 0044-8249, DOI: 10.1002/ANGE.201702486
- YUAN ZIWEN ET AL: "Status and advances of deep eutectic solvents for metal separation and recovery", GREEN CHEMISTRY, vol. 24, no. 5, 9 March 2022 (2022-03-09), GB, pages 1895 - 1929, XP055978599, ISSN: 1463-9262, Retrieved from the Internet <URL:https://pubs.rsc.org/en/content/articlepdf/2022/gc/d1gc03851f> DOI: 10.1039/D1GC03851F

## Description

### FIELD OF DISCLOSURE

This disclosure relates to a method of valorising a solid waste product. Particularly, this disclosure relates to a method of extracting a valuable chemical compound and/or composition from a solid waste product, preferably wherein the method of extracting the valuable chemical compound and/or composition includes leaching and preferably wherein the solid waste product includes blast furnace slag.

### BACKGROUND

Typically, blast furnace slag (BFS) is understood as being a by-product of high temperature (about 1450°C to about 1550°C) iron production in blast furnaces, wherein said blast furnaces are fed by raw material including, but not limited to, iron ore, coke, limestone, and/or a combination of the aforementioned. During iron production processes, the raw material, typically iron ore, is reduced to iron, while all the remaining comprises slag. The slag is typically tapped off as a molten liquid and cooled. Slag solid comprises both crystalline and amorphous phases, including, but not limited to, silicates, aluminosilicates, and/or calcium-aluminosilicates. Naturally, chemical compositions of the slag depend on the composition of the raw material feed and the smelting process. It is known that the chemical composition of slag may include, for example, SiO₂, Al₂O₃, Fe₂O₃, TiO₂, CaO, MgO, K₂O, MnO, P, Cr, Cu, Pb, V, Zn, Ni, Sr, Ba, C, U and S. Valorising slag will not only provide economic benefit but will ameliorate the potential long term negative environmental impact of certain deleterious trace elements including by way of example Cr, Cd, Pb, U and Cu.

It is estimated that about 320 million to about 384 million tons of blast furnace slag is produced annually worldwide and is used extensively in the production of cement. Recently, the demand for blast furnace slag has continued to increase in the cement manufacturing industry where it is used as a close substitute of fly ash, metakaolin and volcanic ash pozzolans. The increase in demand is due to the recent restriction on mercury and carbon dioxide emissions from the production of fly ash from coal plants.

Slag processing techniques have made remarkable progress since 1970s to meet the needs of different specifications and applications. To date, several different approaches have been used to process blast furnace slag. The fast-cooled (quenched) BF slag can be used as a high-value alternative to conventional Portland cement in a wide range of applications due to the similar chemical compositions of the slag to that of the cement. The vitreous solidification of the BF slags in silicate glass forms is the essential condition for their hydraulic properties, which is impacted by all the elements in the slag and cooling rate.

Crystallized blast furnace slag has little or no value as a cementing component. Crushed BF slag for use as aggregate, ballast and lightweight building material has been an important industry for many years. The concrete made BFS as an aggregate has similar properties compared to the conventional aggregates. The BF slags are also used as glass raw material, mineral wool, lime fertilizer, and soil stabilization and conditioner means.

Acid leaching alone of the BFS does not result in sufficient dissolution of aluminium and other metal values. For example, an aqueous suspension of BFS (about 10% pulp density (w/v)) using 1-4M sulphuric acid will dissolve no more than 75.93% Al, 2.05% Ca, 88.67% Fe, 52.72% Si and 33.06% Ti over a period of 1-4hrs and a temperature of 50-70°C. The major drawback in sulphuric acid leaching of blast furnace slag is the formation of insoluble gypsum (CaSO₄) precipitates.

Leaching processes are well known in the valorisation of solid waste material. It is known that the current leaching processes provide limitations or disadvantages including the inability to dissolve all the solid waste material, and therefore providing limited final extraction of all, or substantially all, of the chemical compounds and/or chemical compositions required to be valorised from within the solid waste material.

This provides for multiple methods to be employed before all valuable and/or desired chemical compounds and/or chemical compositions can be successfully extracted from the solid waste product. This increases time and therefore cost. Naturally, this also means more chemicals, equipment and electricity will be required to achieve a certain desired end goal.

In the article by E. Matinde, G. S. Simate, and S. Ndlovu with the title "Mining and metallurgical wastes: a review of recycling and re-use practices", published in The Journal of the Southern African Institute of Mining and Metallurgy, vol. 118, no. 8, p. 825-844 on 1. August 2018, a brief overview on methods for recovering valuable materials from metallurgical waste is provided. The authors referenced the use of deep eutectic solvents based on a mixture of 2:1 urea/choline chloride. Selectivity, e. g. for extracting soluble zinc oxide, led oxide and copper oxide from some mixed metal oxides comprising aluminium oxide and iron oxide in the form of an Electric Arc Furnace (EAF) dust, is described.

Recycling of cobalt from lithium-ion battery material after their end of life, as described by N. Peeters, K. Binnemans and S. Riaño in the article " Solvometallurgical recovery of cobalt from lithium-ion battery cathode materials using deep-eutectic solvents", published in Green Chemistry, 2020, vol. 22, p. 4210-4221, can be carried out using a choline chloride-citric acid deep-eutectic solvent as lixiviant for lithium cobalt oxide. A comparison with conventional hydrochloric acid leaching, which leads to the formation of toxic chlorine gas, was provided by the authors.

According to M. H. Shafie, R. Yusof and C.-Y Gan in "Synthesis of citric acid monohydrate-choline chloride based deep eutectic solvents (DES) and characterization of their physicochemical properties" published in the Journal of Molecular Liquids, 2019, vol. 288, article no. 111081, the properties of the DES such as viscosity, surface tension and density can be affected by the molar ratio of choline chloride and citric acid monohydrate. A ratio of 1:1 was found to meet the eutectic point with the lowest melting temperature. The authors suggested using the DES described as a medium for the extraction of hydrophilic components from plant or animal material.

There is a need for new innovative methods of valorising a solid waste product and to solve at least one of the problems known in the prior art and/or mentioned herein. There is also a need for a chemical composition for use in said methods of valorising a solid waste product. The disclosure described herein below strives to ameliorate at least one of the problems described above and/or otherwise known in the prior art.

### SUMMARY

The invention is defined in the claims.

**Broadly,** in accordance with the invention, there is provided a method valorising a solid waste product, the method comprising the following steps:
(i) dissolving a hydrogen bond acceptor (HBA) and a hydrogen bond donor (HBD) in a HBA-to-HBD molar ratio of 1:1.5 in an aqueous solution to provide a liquid deep eutectic solvent (DES), wherein the DES has a melting point lower than either the HBA or the HBD, or alternatively wherein the DES has a melting point lower than both the HBA and the HBD;
(ii) heating the liquid DES to a temperature of between about 20°C and about 50°C;
(iii) adding the solid waste product, wherein the solid waste product is blast furnace slag (BFS) solid, into the heated liquid DES at a solid-to-liquid ratio of between 1g:20mL and 1g:5mL providing a mixture, wherein the solid waste product comprises a desired valorisable chemical compound and/or chemical composition; and
(iv) agitating said mixture for between about 30 minutes and about 10 hours at a temperature of between about 20°C and about 50°C, such that at least a majority (more than about 50%) of the solid waste product dissolves in the heated liquid DES; and
(v) separating the desired valorisable chemical compound and/or chemical composition from the mixture.

The HBA is choline chloride.

The HBD is citric acid.

The aqueous solution is distilled water.

The liquid DES is liquid choline chloride:citric acid deep eutectic solvent (ChCl:CA-DES).

The solid-to-liquid ratio may be between 1g:15mL and 1g:8mL, preferably 1g:10mL.

Agitating the mixture may take place for between about 1 hour and about 8 hours, preferably about 5 hours.

Agitating the mixture may take place at a temperature of between about 20°C and about 40°C, preferably at about 30°C.

The solid waste product is blast furnace slag (BFS) (including various types of BFS).

The BFS solid may include at least one of the following desired valorisable chemical compounds and/or chemical compositions: SiO₂, Al₂O₃, Fe₂O₃, TiO₂, CaO, MgO, K₂O, MnO, Ca, Al, Fe, Si, P, Cr, Cu, Cd, Pb, V, Zn, Ni, Sr, Ba, C, U, S.

Separating the desired valorisable chemical compound and/or chemical composition may include known separation techniques.

The Applicant was surprised that the HBA-to-HBD ratio, typically the ChCl-to-CA ratio, and/or the solid-to-liquid ratio, and/or the temperature during agitation, and/or the duration of the agitation, alone or in combination, provided for about 100% of dissolution of the BFS solid which in turn facilitated enhanced separation of the desired valorisable chemical compound and/or chemical composition.

The Applicant was surprised to achieve about 100% dissolution of the BFS solid since this is extremely uncommon in solid to liquid extraction techniques known in the prior art. The disclosure herein provides a surprising and unexpected enhancement of dissolving a solid waste product and in turn the separation and/or extraction of the desired valorisable chemical compound and/or chemical composition associated therewith.

### BRIEF DESCRIPTION OF DRAWINGS

- **FIGURE 1**: shows a solid waste product, namely blast furnace slag (BFS) samples;
- **FIGURE 2**: shows an x-ray diffraction (XRD) pattern for raw BFS material before leaching by way of the method of valorising a solid waste product according to this disclosure;
- **FIGURE 3**: shows chemical composition for raw BFS material before leaching by way of the method of valorising a solid waste product according to this disclosure;
- **FIGURE 4**: shows results from a method of valorising a solid waste product, namely leaching of BFS using a prior art teaching of choline chloride and ethylene glycol;
- **FIGURE 5**: shows leaching of BFS by way of the method of valorising a solid waste product according to this disclosure utilizing a choline chloride: citric acid deep eutectic solvent;
- **FIGURE 6**: shows post leach samples after leaching of BFS using ChCl and Citric acid deep eutectic solvent and in accordance with the method of this disclosure;
- **FIGURE 7**: shows a confirmatory experiment 1 including post leach samples after leaching of BFS using ChCl and citric acid deep eutectic solvent and in accordance with the method of this disclosure;
- **FIGURE 8**: shows confirmatory experiment 2 including post leach samples after leaching of BFS using ChCl and citric acid deep eutectic solvent and in accordance with the method of this disclosure;
- **FIGURE 9**: shows leaching of BFS using sulphuric acid known from the prior art;
- **FIGURE 10**: shows post leach samples after sulphuric acid leaching of BFS;
- **FIGURE 11**: shows XRD patterns for BFS after leaching with sulphuric acid; and
- **FIGURE 12**: shows process for recovery of alumina, Ti, and Fe.

### DETAILED DESCRIPTION

The general provisions of the Summary are repeated herein by way of reference thereto and are not necessarily repeated in full to avoid repetition. The detailed description and examples herein below will include particular embodiments of this disclosure and should not be considered as limiting in any way. Several alternatives may be envisioned by a person skilled in the art which does not depart from the scope of this disclosure.

In accordance with the invention, there is provided a method valorising a solid waste product. The solid waste product is blast furnace slag (BFS) which is solid and is a by-product of iron production in blast furnaces. The method comprises the following steps:
(i) dissolving choline chloride (ChCl) and citric acid (CA) in a ChCl-to-CA molar ratio of 1:1.5 in distilled water to provide a liquid ChCl:CA deep eutectic solvent (DES) (ChCl:CA-DES), wherein the ChCl:CA-DES has a melting point lower than either the ChCl or the CA, or alternatively the ChCl:CA-DES has a melting point lower than both the ChCl and the CA;
(ii) heating the liquid ChCl: CA-DES to a temperature of between about 20°C and about 50°C;
(iii) adding blast furnace slag (BFS) solid into the heated liquid ChCl:CA-DES at a solid-to-liquid ratio of between 1g:20mL and 1g:5mL providing a mixture, wherein the BFS solid comprises a desired valorisable chemical compound and/or chemical composition; and
(iv) agitating said mixture for between about 30 minutes and about 10 hours at a temperature of between about 20°C and about 50°C, such that at least a majority (more than about 50%) of the BFS solid dissolves in the heated liquid ChCl:CA-DES; and
(v) separating the desired valorisable chemical compound and/or chemical composition from the mixture.

The solid-to-liquid ratio is between 1g:15mL and 1g:8mL, and is preferably 1g:10mL.

Agitating the mixture typically takes place for between about 1 hour and about 8 hours, preferably about 5 hours.

Agitating the mixture typically takes place at a temperature of between about 20°C and about 40°C, preferably at about 30°C.

The BFS solid may include at least one of the following desired valorisable chemical compounds and/or chemical compositions: SiO₂, Al₂O₃, Fe₂O₃, TiO₂, CaO, MgO, K₂O, MnO, Ca, Al, Fe, Si, P, Cr, Cu, Cd, Pb, V, Zn, Ni, Sr, Ba, C, U, and S.
Separating the desired valorisable chemical compound and/or chemical composition may include known separation techniques.

The Applicant was surprised that the HBA-to-HBD ratio, typically the ChCl-to-CA ratio, and/or the solid-to-liquid ratio, and/or the temperature during agitation, and/or the duration of the agitation, alone or in combination, provided for about 100% of dissolution of the BFS solid which in turn facilitated enhanced separation of the desired valorisable chemical compound and/or chemical composition.

The Applicant was surprised to achieve about 100% dissolution of the BFS solid since this is extremely uncommon in solid to liquid extraction techniques known in the prior art. The disclosure herein provides a surprising and unexpected enhancement of dissolving BFS solid waste and in turn the separation and/or extraction of the desired valorisable chemical compound and/or chemical composition associated therewith.

### EXAMPLES

A non-limiting example is provided hereunder to illustrate and exemplify a preferred embodiment of this disclosure. The example hereunder shows valorisation of blast furnace slag (BFS) via an extraction method employing a eutectic solvent, typically a deep eutectic solvent. The example includes two stages shown below.

A eutectic solvent is understood as a homogeneous composition that has a melting point lower than its constituent chemical components. The homogenous composition has physico-chemical properties unique to that of its constituent chemical components. A deep eutectic solvent is understood as a eutectic solvent comprising Lewis or Bronsted acids and bases.

The first stage involved the characterisation of BFS material including (i) the determination of the physico-chemical properties of the BFS obtained from selected tailings in South Africa, and (ii) determination of the levels of trace deleterious elements (including Cr, Cd, Pb and U) within the BFS.

The second stage involved developing a method for valorising a solid waste product, namely the BFS. The method included solubilisation of the BFS and extraction of valuable chemicals and/or compositions therefrom. The method was compared to a known method described in the prior art.

### Materials

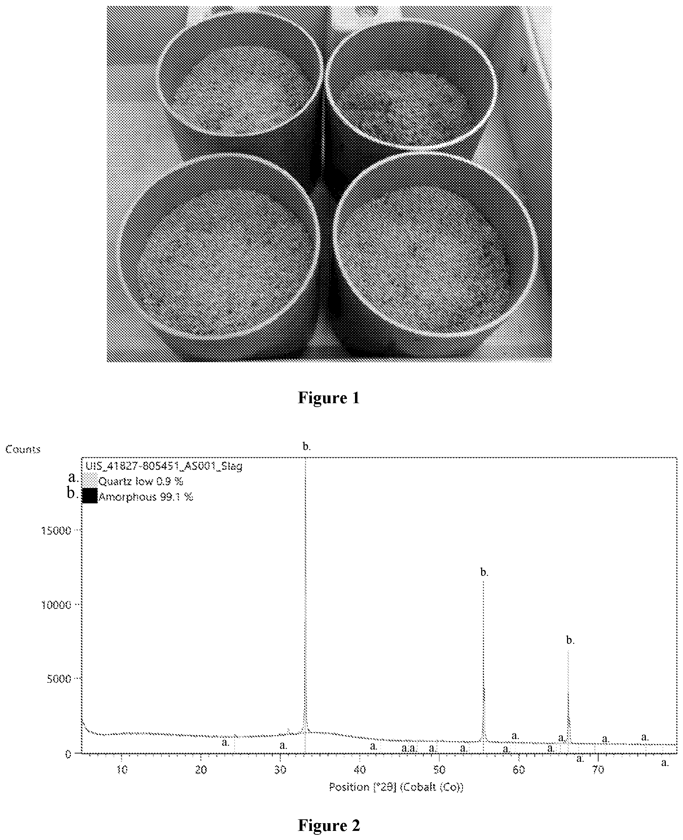

Blast furnace slag (BFS) material (**Figure 1**) was sourced and analysed such that it comprised 38.5% silica, 17.2% alumina, 33.3% calcium oxide and 8.2% magnesium oxide. The BFS was characterized by investigating phase mineralogy and chemical composition.

### Methods

Using the rotary sampler, representative samples were obtained from the as received blast furnace slag material. Three leaching tests, based on the design of experiments (DOE), were investigated. Each test had 8 experimental runs. The total number of experimental runs was 24. The DOE plan is shown in Table 1.

**Table 1: Experimental factors and levels for controlled factors**

| **Standard Run Order** | **Random Run Order** | **Controlled Factors** | | |
|---|---|---|---|---|
| | | A | B | C |
| 1 | 5 | -1 | -1 | -1 |
| 2 | 7 | +1 | -1 | -1 |
| 3 | 8 | -1 | +1 | -1 |
| 4 | 6 | +1 | +1 | -1 |
| 5 | 4 | -1 | -1 | +1 |
| 6 | 3 | +1 | -1 | +1 |
| 7 | 2 | -1 | +1 | +1 |
| 8 | 1 | +1 | +1 | +1 |

| | | | | |
|---|---|---|---|---|
| A = temperature (-1, 30°C; +1, 50°C), B = reagent (-1, low; +1, high), C = residence time (-1, 1hr; +1, 4hrs). | | | | |

The first leaching test (test 1), using the DOE shown in **Table 1,** involved the use of choline chloride (ChCl) and ethylene glycol (EG).

The second test (test 2) entailed the use of choline chloride and citric acid according to this disclosure.

The third test (test 3) involved the use of sulphuric acid (H₂SO₄), a conventional lixiviant known in the prior art. The leaching was conducted using a 166 L incubator shaker (Model: FSIM-SP016, Labcon Laboratory Equipment (Pty), South Africa). After leaching, the leachate was analyzed for dissolved elements using ICP-OES.

The solid residue was characterized using x-ray diffraction (XRD) analysis. The material was scanned after addition of 20% Si for quantitative determination of amorphous content and micronizing in a McCrone micronizing mill. The material was prepared for XRD analysis using a back loading preparation method. Diffractograms were obtained using a Malvern Panalytical Aeris diffractometer with PIXcel detector and fixed slits with Fe filtered Co-Kα radiation. The phases were identified using X'Pert Highscore plus software. The relative phase amounts (weight %) were estimated using the Rietveld method.

The percent metal extraction from BFS material was calculated as a percentage of the element in the liquid phase to that in the BFS solid phase. Five elements, Ca, Al, Fe, Si and Ti were specifically chosen. The characterization and analysis results are presented and discussed in the section that follows.

### Results and discussion

### Phase mineralogy characterization of raw BFS

The XRD patterns for BFS before leaching are presented in Figure 2 (the so-called raw BFS). The pattern in the figure shows that the BFS raw material is mainly composed of non-crystalline amorphous phase (99.1%). The crystalline quartz phase makes up only 0.9% of the BFS material.

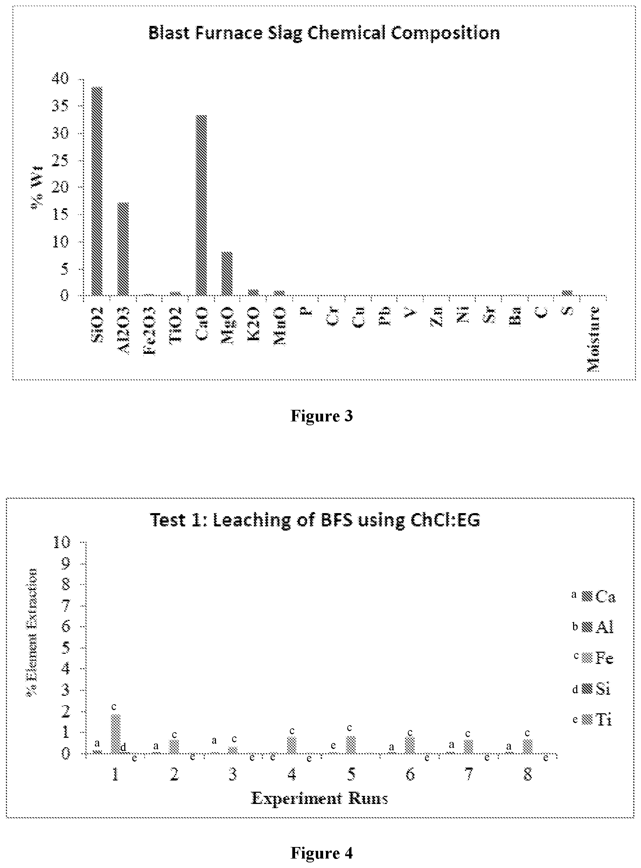

The chemical composition of the BFS sample is shown in Table 2 and Figure 3. The BFS material holds a high silica content of 38.80 wt.%; alumina 17.20 wt.%; calcium oxide, 33.30 wt.% and magnesium oxide, 8.16%. The order of predominance, as seen in Figure 3, is silica>calcium oxide>alumina>magnesium oxide.

**Table 2: Chemical composition of BFS**

| **Elemen t** | SiO ₂ | Al₂O ₃ | Fe ₂ O ₃ | TiO₂ | Ca O | Mg O | K2 O | Mn O | P | Cr | Cu | Pb | v | Zn | Ni | Sr | Ba | c | s |
|---|---|---|---|---|---|---|---|---|---|---|---|---|---|---|---|---|---|---|---|
| **Wt%** | 38.8 | 17.2 | 0.38 | 0.73 2 | 33. 3 | 8.16 | 1.19 | 0.98 | 0.0 4 | 0.00 2 | 0.00 1 | 0.00 8 | 0.00 2 | 0.00 1 | 0.00 1 | 0.1 6 | 0.2 3 | 0.00 3 | 1.0 3 |

### Effect of ChCl and EG on BFS dissolution

Choline chloride (ChCl) is a hydrogen bond acceptor and ethylene glycol (EG) is a hydrogen bond donor. When mixed, the two reagents form a deep eutectic solvent (DES) that maintains its liquid properties at lower than room temperature. Experimental results for test 1 are shown in Figure 4. The figure shows that all the five elements reported were below 10% extraction. The results reveal that BFS dissolution was not favoured by the ChCl and EG DES lixiviant combination which seems to have had low affinity for BFS. Without being limited to theory, the poor results are also attributed to high viscosity of the solvent which may have adversely affected the mass transfer of reactants and products thereby resulting in low extraction efficiencies.

### The effect of ChCl and citric acid on BFS dissolution

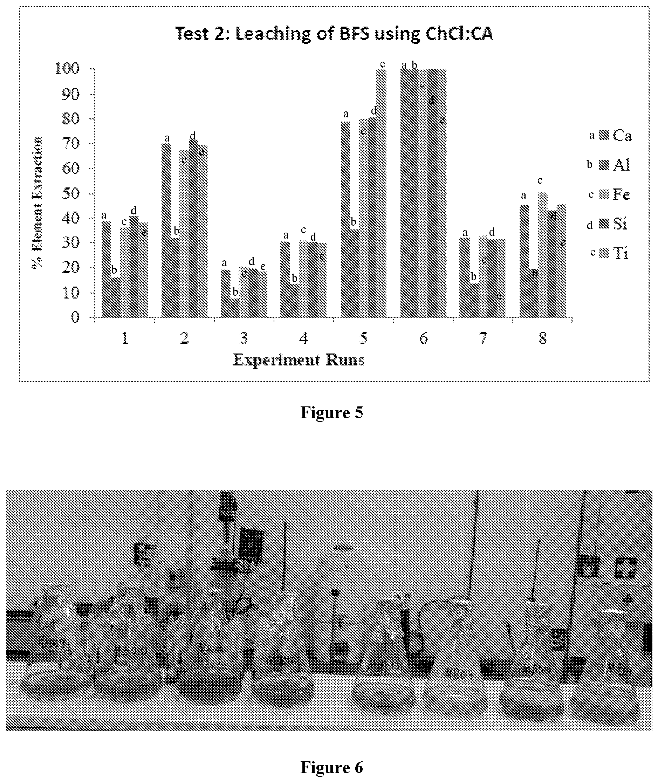

Experimental results for test 2 are shown in Figure 5. The figure shows that BFS dissolution was well favoured by the ChCl and citric acid DES lixiviant combination. All the five elements reported extractions higher than 10% except for Al in experiment run 3. Furthermore, the figure reveals that in experiment run number 6, all the elements in the BFS material underwent 100% dissolution. The Applicant was surprised by the complete dissolution of the BFS in the DES of choline chloride and citric acid. Without being limited to theory, dissolution of metals from BFS using a lixiviant such as deep eutectic ligands is possible through proton attack and complexation mechanisms.

A preferred embodiment of the disclosure is presented here below wherein 44.6g of choline chloride and 92.2g - 153.7g of citric acid were dissolved in 90-150mL of distilled water to form eutectic solvents. 9g-15g of blast furnace slag was mixed with the eutectic solvents and leached in a shaking incubator at 30-50°C, at a shaking rate of 150rpm for 1-4hrs. The results of a series of such tests are summarized in Table 3 below.

**Table 3 below shows the processing conditions of test 2:**

| | | | | | | | **Metals Leached** | | | |
|---|---|---|---|---|---|---|---|---|---|---|
| **Experiment** | **Temp.** | **ChCl: Citric Acid** | **Leaching time** | **Slag weight** | **Sold-to-liquid** | **Ca** | **Al** | **Fe** | **Si** | **Ti** |
| **Run** | **°C** | **Molar Ratio** | **hrs** | **g** | **Ratio** | **(%)** | **(%)** | **(%)** | **(%)** | **(%)** |
| 1 | 30 | 1:1.5 | 1 | 9 | 10 | 38.68 | 16.05 | 36.62 | 40.93 | 38.13 |
| 2 | 50 | 1:1.5 | 1 | 9 | 10 | 69.98 | 31.82 | 67.5 | 71.57 | 69.38 |
| 3 | 30 | 1:2.5 | 1 | 15 | 10 | 19.23 | 7.58 | 20.56 | 19.72 | 18.56 |
| 4 | 50 | 1:2.5 | 1 | 15 | 10 | 30.5 | 13.74 | 30.88 | 30.36 | 29.89 |
| 5 | 30 | 1:1.5 | 4 | 9 | 10 | 78.8 | 35.39 | 79.85 | 80.85 | 100 |
| 6 | 50 | 1:1.5 | 4 | 9 | 10 | 100 | 100 | 100 | 100 | 100 |
| 7 | 30 | 1:2.5 | 4 | 15 | 10 | 31.93 | 13.91 | 32.82 | 31.21 | 31.46 |
| 8 | 50 | 1:2.5 | 4 | 15 | 10 | 45.2 | 19.59 | 50.21 | 43.06 | 45.38 |

Although the formation of insoluble gypsum and silica gel was observed in the other reagent combinations, it was found that all the metal salts, even in oxide forms are soluble in the choline: citric acid deep eutectic solvent.

Metal dissolution by ligands is achieved by the proton attack and complexation reactions of the metal with the ligand as exemplified in the generic reactions shown in Equations 1 and 2:

2MeO + 4H⁺ = 2Me²⁺ + 2H₂O (1)

Me²⁺ + 2C₃H₅O ⁻¹ = 2C₃H₅MeO (2)

The DES of choline chloride and citric acid provide ligands that seem to have an extremely high affinity for the blast furnace slag. It is evident that the silicate phase matrix housing the metal constituents in the slag is easily broken by the of choline chloride and citric acid thus releasing the metals into solution. The 100% dissolution phenomenon is not common for solid-to-liquid extraction processes. The Applicants notes that only a particular unique ChCl:Citric acid DES formulation was able to achieve complete dissolution of the BFS. All other formulations only achieved partial dissolution.

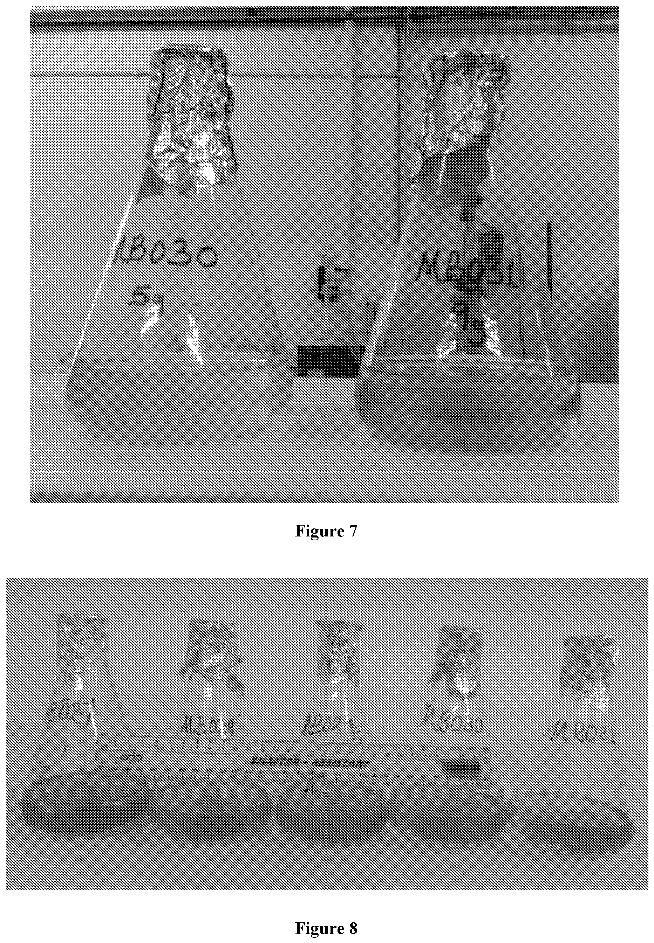

In order to confirm the reproducibility of the 100 % dissolution result, the 6^{th} experiment was repeated seven times. For each run, 9g of BFS was reacted with 90 mL of the DES of choline chloride and citric acid lixiviant. The replicates yielded similar 100 % dissolution results, thus confirming the validity of the first result. The post leach samples from the ChCl:Citric acid experiment are displayed in **Figures 6****,** **7** and **8****.** The flask with 100% dissolution, in **Figure 6****,** is flask number 6 labelled MB014.

### The Effect of sulphuric acid on BFS dissolution

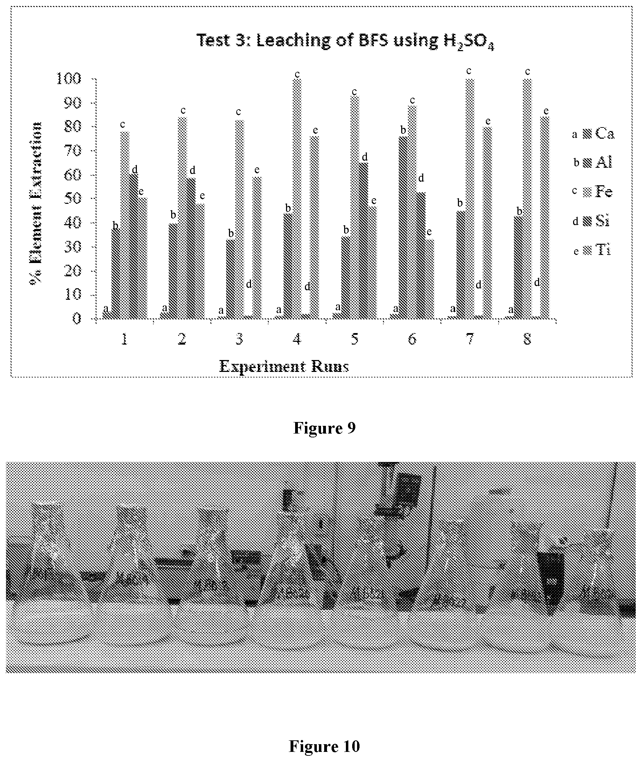

Experimental results for test 3 are shown in Figure 9. The figure shows that sulphuric acid leaching favoured Fe and Ti dissolution in all the experimental runs. Significant Si dissolution occurred in runs 1, 2, 5 and 6. Aluminium dissolution occurred in all the 8 runs but its highest dissolution was in run number 6. The order of dissolution was Fe>Ti>Al>Si>Ca. The post leaching samples are displayed in Figure 10. The formation of a white precipitate is evident in all the 8 runs in Test 3.

### Phase mineralogy changes after sulphuric acid leaching

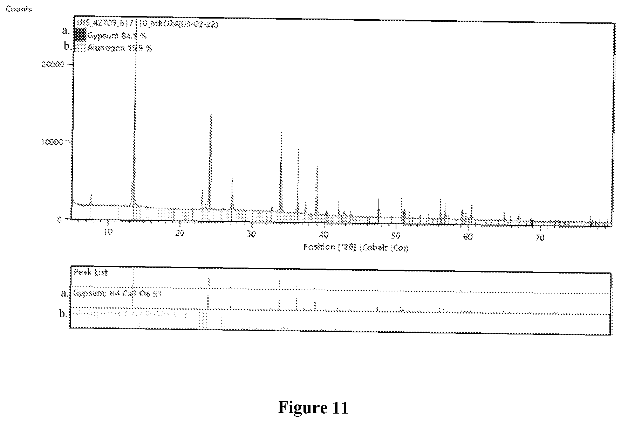

The XRD patterns for BFS after leaching with sulphuric acid is presented in Figures 11. The patterns in the figure show that the leach residue is mainly composed of gypsum (CaSO4) (84.1%). The rest of the material is alunogen (Al₂(SO₄)₃·17H₂O) (15.9%). The formation of gypsum alunogen is attributed to the presence of sulphate ions from sulphuric acid. The formation of the gypsum and alunogen precipitates occurred according to the following possible reactions (Eqn.3, Eqn.4):

Ca²⁺ + SO₄²⁻ = CaSO₄ (3)

2Al³⁺ + 3SO₄²⁻ + 17H₂O = Al₂(SO₄)₃·17H₂O (4)

A comparison between the BFS before and after leaching with sulphuric acid shows that the quartz and amorphous material in the raw BFS reacted with sulphuric acid and was transformed to gypsum and alunogen.

### Conclusions

The experimental results of the BFS analysis show that the material is predominantly composed of silica, calcium, alumina, and magnesium compounds assaying, 38.8%, 33.3%, 17.2% and 8.2% respectively. The order of dominance is silica>calcium oxide>alumina> magnesium oxide.

Characterization of the BFS shows that deleterious trace elements of Cr, Cd, Pb and U were not detected in the slag. Among the three different types of tests conducted, test 2, using ChCl and citric acid emerged the best. This is attributed to the unique formulation of this lixiviant and its ability to access the phases housing the metals present, its high affinity for the metals, the solubility and stability of the complex metal salts formed, and the process in which it is utilized.

Although test 3 gave better encouraging results compared to test 1, sulphuric acid leaching is not a green technology, hence unlikely to be chosen as an alternative route.

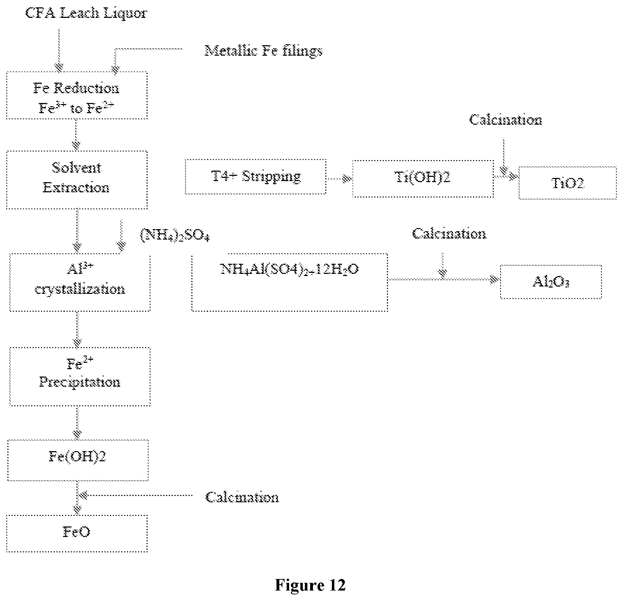

A flowsheet set out in Figure 12 shows the suggested way forward for subsequent processing of the leach solution for possible recovery of alumina.

Due to a high content of CaO, it is anticipated that, in the alumina recovery route, CaSO₄ formation is highly likely at low pH levels. Therefore, a filtration step to remove the CaSO₄ precipitate should and will be provided for.

The Applicant believes that the disclosures herein at least ameliorate the disadvantages known or described in the prior art in a surprising and unexpected manners.

While the disclosure has been described in detail with respect to specific embodiments and/or examples thereof, it will be appreciated that those skilled in the art, upon attaining an understanding of the foregoing may readily conceive of alterations to, variations of, and equivalents to these embodiments. Accordingly, the scope of the present disclosure should be assessed as that of the claims which claims are appended to this patent application.

## Claims

1. A method valorising a blast furnace slag (BFS) solid, the method comprising the following steps:
(i) dissolving choline chloride (ChCl) and citric acid (CA) in a ChCl-to-CA molar ratio of 1:1.5 in distilled water to provide a liquid ChCl:CA deep eutectic solvent (DES) (ChCl:CA-DES), wherein the ChCl:CA-DES has a melting point lower than either the ChCl or the CA, or alternatively the ChCl:CA-DES has a melting point lower than both the ChCl and the CA;
(ii) heating the liquid ChCl:CA-DES to a temperature of between about 20°C and about 50°C;
(iii) adding the blast furnace slag (BFS) solid into the heated liquid ChCl:CA-DES at a solid-to-liquid ratio of between 1g:20mL and 1g:5mL providing a mixture, wherein the BFS solid comprises a desired valorisable chemical compound and/or chemical composition; and
(iv) agitating said mixture for between about 30 minutes and about 10 hours at a temperature of between about 20°C and about 50°C, such that at least a majority (more than about 50%) of the BFS solid dissolves in the heated liquid ChCl:CA-DES; and
(v) separating the desired valorisable chemical compound and/or chemical composition from the mixture.

2. The method of Claim 1, wherein the solid-to-liquid ratio is between 1g:15mL and 1g:8mL, including 1g:10mL.

3. The method of any one of Claims 1 to 2, wherein Step (iv) agitating the mixture takes place for between about 1 hour and about 8 hours, including about 5 hours.

4. The method of any one of Claims 1 to 3, wherein Step (iv) agitating the mixture takes place at a temperature of between about 20°C and about 40°C, including at about 30°C.

5. The method of any one of Claims 1 to 4, wherein the BFS solid includes at least one of the following desired valorisable chemical compounds and/or chemical compositions: SiO₂, Al₂O₃, Fe₂O₃, TiO₂, CaO, MgO, K₂O, MnO, Ca, Al, Fe, Si, P, Cr, Cu, Cd, Pb, V, Zn, Ni, Sr, Ba, C, U, and S.

## Patentansprüche

1. Verfahren zur Verwertung von Hochofenschlacke (nachfolgend abgekürzt BFS) als Feststoff, wobei das Verfahren die folgenden Schritte umfasst:
(i) Lösen von Cholinchlorid (nachfolgend abgekürzt ChCl) und Zitronensäure (nachfolgend abgekürzt CA) in einem Molverhältnis von ChCl zu CA von 1:1,5 in destilliertem Wasser, um ein flüssiges stark eutektisches ChCl:CA-Lösungsmittel (nachfolgend abgekürzt ChCl:CA-DES) bereitzustellen, wobei das ChCl:CA-DES einen Schmelzpunkt hat, der niedriger ist als entweder das ChCl oder die CA, oder wobei alternativ das ChCl:CA-DES einen Schmelzpunkt hat, der niedriger ist als beides, das ChCl und die CA;
(ii) Erwärmen des flüssigen ChCl:CA-DES auf eine Temperatur von zwischen ungefähr 20°C und ungefähr 50°C;
(iii) Hinzufügen der Hochofenschlacke (BFS) als Feststoff zu dem erwärmten flüssigen ChCl:CA-DES in einem Feststoff-Flüssigkeits-Verhältnis von zwischen 1g:20mL und 1g:5mL, wodurch eine Mischung bereitgestellt wird, wobei die BFS als Feststoff eine gewünschte verwertbare chemische Verbindung und/oder chemische Zusammensetzung umfasst; und
(iv) Rühren dieser Mischung für zwischen ungefähr 30 Minuten und ungefähr 10 Stunden bei einer Temperatur von zwischen ungefähr 20°C und ungefähr 50°C, so dass sich wenigstens ein Großteil (mehr als ungefähr 50%) des BFS als Feststoff in dem erwärmten flüssigen ChCl:CA-DES löst; und
(v) Abtrennen der gewünschten verwertbaren chemischen Verbindung und/oder chemischen Zusammensetzung von der Mischung.

2. Verfahren nach Patentanspruch 1, wobei das Feststoff-Flüssigkeits-Verhältnis zwischen 1g:15mL und 1g:8mL beträgt, einschließlich 1g:10mL.

3. Verfahren nach einem der Patentansprüche 1 bis 2, wobei Schritt (iv) Rühren der Mischung für zwischen ungefähr 1 Stunde und ungefähr 8 Stunden stattfindet, einschließlich ungefähr 5 Stunden.

4. Verfahren nach einem der Patentansprüche 1 bis 3, wobei Schritt (iv) Rühren der Mischung bei einer Temperatur von zwischen ungefähr 20°C und ungefähr 40°C stattfindet, einschließlich bei ungefähr 30°C.

5. Verfahren nach einem der Patentansprüche 1 bis 4, wobei die BFS als Feststoff wenigstens eine der folgenden gewünschten verwertbaren chemischen Verbindungen und/oder chemischen Zusammensetzungen einschließt: SiO₂, Al₂O₃, Fe₂O₃, TiO₂, CaO, MgO, K₂O, MnO, Ca, Al, Fe, Si, P, Cr, Cu, Cd, Pb, V, Zn, Ni, Sr, Ba, C, U, und S.

## Revendications

1. Procédé de valorisation de solides de laitier de haut fourneau (LHF), le procédé comprenant les étapes suivantes :
(i) dissolution de chlorure de choline (ChCl) et d'acide citrique (CA) en un rapport molaire du ChCl au CA de 1/1,5 dans de l'eau distillée pour donner un solvant eutectique profond (DES) (ChCl/CA-DES), lequel ChCl/CA-DES a un point de fusion inférieur à celui soit du ChCl soit du CA, ou en variante lequel ChCl/CA-DES a un point de fusion inférieur à ceux tant du ChCl que du CA ;
(ii) chauffage du ChCl/CA-DES liquide à une température comprise entre environ 20 °C et environ 50 °C ;
(iii) addition du laitier de haut fourneau (LHF) dans le ChCl/CA-DES liquide chauffé à un rapport des solides aux liquides compris entre 1 g/20 ml et 1 g/5 ml, ce qui donne un mélange, dans lequel les solides de LHF comprennent une composition chimique et/ou un composé chimique valorisables souhaités ; et
(iv) agitation dudit mélange pendant environ 30 minutes à environ 10 heures à une température comprise entre environ 20 °C et environ 50 °C, de façon qu'au moins la majorité (plus d'environ 50 %) des solides de LHF se dissolve dans le ChCl/CA-DES liquide chauffé ; et
(v) séparation de la composition chimique et/ou du composé chimique valorisables souhaités d'avec le mélange.

2. Procédé selon la revendication 1, dans lequel le rapport des solides aux liquides est compris entre 1 g/15 ml et 1 g/8 ml, y compris 1 g/10 ml.

3. Procédé selon l'une quelconque des revendications 1 et 2, dans lequel l'étape (iv) d'agitation du mélange se déroule pendant environ 1 heure à environ 8 heures, y compris environ 5 heures.

4. Procédé selon l'une quelconque des revendications 1 à 3, dans lequel l'étape (iv) d'agitation du mélange se déroule à une température comprise entre environ 20 °C et environ 40 °C, y compris environ 30 °C.

5. Procédé selon l'une quelconque des revendications 1 à 4, dans lequel les solides de LHF comprennent au moins l'un parmi les compositions chimiques et/ou les composés chimiques valorisables souhaités suivants : SiO₂, Al₂O₃, Fe₂O₃, TiO₂, CaO, MgO, K₂O, MnO, Ca, Al, Fe, Si, P, Cr, Cu, Cd, Pb, V, Zn, Ni, Sr, Ba, C, U, et S.
